# NEUE EUROPÄISCHE PATENTSCHRIFT

(11) **EP 2 586 658 B2**
(45) Veröffentlichungstag und Bekanntmachung des Hinweises auf die Entscheidung über den Einspruch: **21.07.2021**
(45) Hinweis auf die Patenterteilung: 24.05.2017
(21) Anmeldenummer: 12006339.1
(22) Anmeldetag: 08.09.2012
(51) Int. Cl.: B60P 7/135, B62D 33/02, B60J 5/06

(54) **Fahrzeugaufbau für den Transport von schütt- oder stapelbaren Transportgütern**
Vehicle structure for the transport of bulk or stackable transport goods
Caisse de véhicule pour le transport de marchandises de transport empilables ou coulables

(30) Priorität: 27.10.2011 DE 102011117068
(43) Veröffentlichungstag der Anmeldung: 01.05.2013
(73) Patentinhaber: Fahrzeugwerk Bernard Krone GmbH, 48480 Spelle (DE)
(72) Erfinder: Thorsten, Perk, 29601 Lorup (DE)
(74) Vertreter: Pott, Ulrich

(56) Entgegenhaltungen:
- EP-A2- 2 371 594
- EP-A2- 2 371 594
- DE-U1- 20 022 003
- GB-A- 2 327 450
- GB-A- 2 327 450
- GB-A- 2 457 128
- US-A- 3 704 672
- US-A- 3 704 672
- US-A- 4 545 611
- US-A- 4 762 361
- US-A- 4 762 361
- US-A- 5 176 388
- US-A- 5 176 388

## Beschreibung

Die Erfindung bezieht sich auf einen Fahrzeugaufbau für den Transport von schüttoder stapelbaren Transportgütern, beispielsweise von Fahrzeugreifen mit einem sich oberhalb eines Laderaumbodens erstreckenden Laderaum, der von Stirnwänden vorder- und rückseitig begrenzt ist, zwischen denen sich in Längsrichtung des Fahrzeugaufbaus zu öffnende und zu schließende Seitenplanen Seitenplanen zum Verschließen des Laderaumes erstrecken, wobei sich die Seitenplanen im geschlossenen Zustand von aufrecht am Laderaumboden festgelegten Rungen erstrecken und in Planentaschen angeordnete Profilkörper zur Aussteifung der jeweiligen Seitenplane aufweisen.

Fahrzeugaufbauten der vorgenannten Art für den Transport von Reifen im öffentlichen Straßenverkehr sind allgemein bekannt. Dazu ist es beispielsweise bekannt, Fahrzeugreifen in Stapeln gleicher Höhe oder in Stapeln in abgestufter Höhe auf dem Laderaumboden zu platzieren, die von den Seitenplanen seitlich begrenzt werden. Darüber hinaus ist es bekannt, die Fahrzeugreifen auf dem Laderaumboden in einen Brezelverbund abzulegen und den Laderaum nach innen hin durch horizontal und parallel zur Fahrzeuglängsachse ausgerichtete, mit Abstand zueinander angeordnete Latten seitlich zu begrenzen, die sich zum Laderaum hin vor den jeweiligen Seitenplanen erstrecken und die an Rungen gehaltert sind. Darüber hinaus ist es bekannt, solche Latten in Querrichtung durch Gurtbänder in Diagonalanordnung und/oder horizontal quer zur Längserstreckung des Laderaumes zu verzurren. Nachteilig hierbei ist, dass eine Ausbeulung von Seitenplanen nicht zu verhindern ist. Darüber kann das Transportgut durch die Gurte beschädigt werden. Bei einem Ausbeulen der Seitenplanen ist jedoch nicht mehr gewährleistet, dass die maximal zulässige Fahrzeugbreite eingehalten ist, was unkalkulierbar zu schwerwiegenden Sicherheitsrisiken führen kann.

Es ist versucht worden, bei gebrezelter Beladung des Laderaumes durch die Fahrzeugreifen Zusatzausstattungen vorzusehen, beispielsweise in Gestalt von mit Lochausnehmungen versehenen zusätzlichen Aufsatzlatten, die zwischen den Rungen anzuordnen sind und die ein Ausbeulen verhindern sollen. Diese zusätzlichen Aufsatzlatten können zwar einen Beitrag dazu leisten, einem Ausbeulen vorzubeugen. Nachteilig hierbei ist jedoch auch, dass diese einen erheblichen Bauaufwand darstellen. Sollen nach einem Reifentransport andere Materialien befördert werden, die die Aufsatzlatten nicht benötigen, sind diese mit erheblichem Aufwand zu entfernen und mit einem nicht unerheblichen Platzbedarf zu bevorraten, der in aller Regel im Fahrzeug nicht zur Verfügung gestellt werden kann. Dies steht daher einer Nutzung des Fahrzeuges für variable Transportaufgaben entgegen.

Darüber hinaus ist ein Fahrzeugaufbau der eingangs genannten Art bekannt geworden, bei dem die Seitenplanen Planentaschen aufweisen, in die Profilkörper, beispielsweise aus einem Aluminiummaterial, einzubringen sind, die die Seitenplane örtlich aussteifen. Diese Profilkörper können bei einer Öffnungs- bzw. einer Schließbewegung der Seitenplane mitgeführt werden, so dass diese die Zugänglichkeit des Laderaumes nicht weiter behindern. Gleichwohl ist auch mit diesen die Seitenplanen aussteifenden Profilkörpern eine Ausbeulung nicht sicher zu vermeiden mit dem Risiko des Überschreitens der maximal zulässigen Fahrzeugbreite.

Aus der US 4,545,611 A ist ein gattungsgemäßer Fahrzeugaufbau der eingangs genannten Art bekannt. In die Plane sind dort Formstreifen als leicht gekrümmte Kunststoffmaterialien mit einer mittleren Einkerbung eingelassen, die dazu dienen, eine exakte Auffaltung der Plane zu erleichtern.

Es ist Aufgabe der vorliegenden Erfindung, einen Fahrzeugaufbau der eingangs genannten Art zu schaffen, der universell einsetzbar und kostengünstig herstellbar ist und bei dem zudem einem Ausbeulen einer Seitenplane wirksam entgegen getreten ist.

Zur Lösung dieser Aufgabe zeichnet sich der Fahrzeugaufbau der eingangs genannten Art dadurch aus, dass jede Seitenplane ein sich zumindest zwischen zwei benachbarten Rungen mit Höhenabstand zum Laderaumboden und sich im Wesentlichen parallel zu diesem erstreckendes Spannelement aufweist, wobei das Spannelement im gespannten Zustand die in den Planentaschen zwischen den beiden benachbarten Rungen angeordneten Profilkörper abstützt zusammen mit der Seitenplane zu bewegen ist und über ein Spannelement zu spannen ist, wobei das Spannelement flexibel ausgebildet ist und weggenommen werden kann und wobei das Spannelement von der Spannvorrichtung derart zu verspannen ist, dass die Seitenplane und deren Profilkörper an dem Spannelement abzustützen sind, und wobei das Spannelement (14) an Befestigungselementen (19) von zwei benachbarten Mittelrungen (9) festgelegt ist.

Damit ist ein Fahrzeugaufbau geschaffen, bei dem mittels des jeweiligen Spannelementes die in die Planentaschen einzusetzenden Profilkörper zusätzlich abzustützen sind. Da das jeweilige Spannelement sich mit Höhenabstand zum Laderaumboden erstreckt, können die Abstützkräfte über das Spannelement dort in die Profilkörper und mithin in die Seitenplane eingeleitet werden, wo entsprechende Kräfte durch gestapelte oder gebrezelte Reifen oder sonstige Frachtgüter auftreten. Damit ist einem Ausbeulen der Seitenplane wirksam entgegen getreten.

Als Spannelement sind Spannketten, Spannseile und auch Spanngurte geeignet, die insgesamt flexibel sind, so dass diese zusammen mit der Seitenplane zu bewegen sind und eine entsprechende Faltung der Seitenplane mitmachen. Somit ist der Laderaum nach einer Öffnungsbewegung der Seitenplane zugänglich, ohne dass es aufwändiger Demontagearbeiten bedarf, um sonstige Aussteifkörper wie im Stand der Technik bekannt wegzunehmen.

Bevorzugtermaßen ist das jeweilige Spannelement zwischen zwei benachbarten Rungen vorzusehen und mittels einer Spannvorrichtung zu verspannen. Das Spannelement kann über einen Abdeckkörper, z.B. ein Abdeckblech am Profilkörper gehalten sein, um die Abstützfunktion zu realisieren. Über eine innere Seitenplane ist das Spannelement zugänglich. Um das Spannelement zusätzlich abzustützen, kann ein abnehmbarer Spannelementhalter vorgesehen werden, der z.B. in Gestalt eines Armes sich an dem Laderaumboden abstützt und in dem gewünschten Höhenmaß mit einem Befestigungselement endet, auf dem das Spannelement abzulegen bzw. abzustützen ist und somit auch einer Gewichtskraft von oben standhalten kann. Besonders bevorzugt ist, wenn neben einer Außenplane, die von den erwähnten Profilkörpern ausgesteift ist, zusätzlich eine innere Plane vorgesehen ist, die die Außenplane, die Profilkörper und das Spannelement übergreift und diese zum Laderaum hin abdeckt. Durch diese Kombination ist sicher ein Ausbeulen der Außenplanen zu vermeiden.

Weitere bevorzugte Ausgestaltungen der Erfindung ergeben sich aus weiteren Unteransprüchen, der nachfolgenden Beschreibung und der Zeichnung. In der Zeichnung zeigen:
- Fig. 1: in einer schematischen Prinzipdarstellung ein Ausführungsbeispiel eines Fahrzeugaufbaus gemäß der Erfindung mit einer Ansicht in den Laderaum mit einer vorderen, nicht eingezeichneten Seitenplane und einer rückseitig geschlossenen Seitenplane;
- Fig. 2: vergrößert das Detail A in Fig. 1;
- Fig. 3: perspektivisch ein Ausführungsbeispiel eines Nutzfahrzeugaufbaus nach der Erfindung mit Darstellung von Mittelrungen ohne Darstellung von Seitenplanen;
- Fig. 4: das Detail A in Fig. 3;
- Fig. 5: das Detail D in Fig. 3, und
- Fig. 6: das Detail E in Fig. 3.

In der Zeichnung sind übereinstimmende Teile mit übereinstimmenden Bezugsziffern versehen.

Allgemein mit 1 ist ein Nutzfahrzeugaufbau beziffert, der ein Fahrgestell 2 aufweist, das über Fahrzeugräder 3 auf dem Erdboden abgestützt ist. Der Fahrzeugaufbau 1 weist einen Laderaumboden 4 auf, oberhalb dessen sich der Laderaum 5 erstreckt. Dieser ist vorder- und rückseitig durch Stirnwände 6 begrenzt, die rückseitig als Flügeltüren ausgebildet sind. Seitlich ist der Laderaum 5 durch jeweils eine Seitenplane 7 begrenzt, die nach Art einer Gardine auf und zu zu bewegen ist und deshalb beweglich in oberen Längstraversen 8 geführt ist. Diese Längstraversen 8 sind an Mittelrungen 9 und Eckrungen 10 abgestützt. Im Einzelnen nicht dargestellt ist jeder Seitenplane 7 eine innere zum Laderaum hin gelegene weitere Plane zugeordnet.

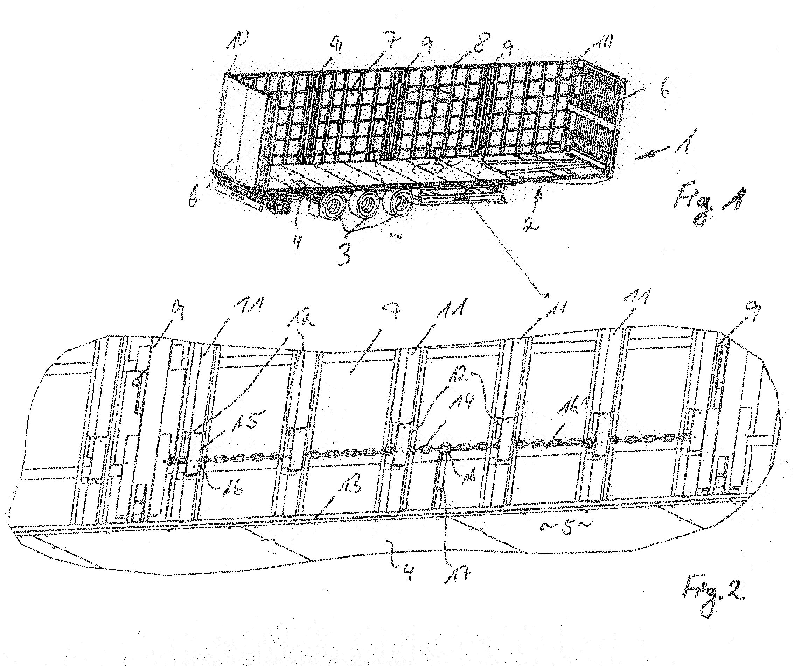

Wie näher aus Fig. 2 hervorgeht, sind in die äußere Seitenplane 7 jeweils Planentaschen 11 eingelassen, in die Profilkörper 12 eingelassen sind, die in dem vorliegenden Ausführungsbeispiel als Hohlprofilkörper aus einem Aluminiummaterial gebildet sind. Diese Profilkörper 12 können mit der jeweiligen Planentasche 11 vernietet sein.

Wie näher der Darstellung nach Fig. 2 zu entnehmen ist, ist zwischen zwei benachbarten Rungen 9 ein Spannelement 14 in Gestalt einer Spannkette vorgesehen. Diese Spannkette 14 verläuft unterhalb der Planentaschen 11 und stützt den Profilkörper 12 mit seinem Abdeckkörper 15 ab, wobei der Abdeckkörper 15 mit seinem Abdeckblech 16 zum Laderaum 5 hin über die erwähnte weitere innere Seitenplane abgedeckt sein kann. Die Spannkette 14 ist flexibel ausgebildet und kann weggenommen und leicht bevorratet werden. Gleichwohl ist sie derart einer Spannvorrichtung 16.1 zu verspannen, dass die Seitenplane 7 und deren Profilkörper 12 an der Spannkette 14 abzustützen sind, und zwar mit Lageabstand zum Laderaumboden 4. Um diesen Lageabstand sicher einzuhalten, ist zwischen zwei benachbarten Profilkörpern 12 ein Spannelementhalter 17 vorgesehen, der einen Befestigungsarm 18 aufweist, auf den ein Kettenglied der Spannkette 14 abzustützen ist. Damit ist der Höhenabstand zum Laderaumboden 4 sicher einzuhalten.

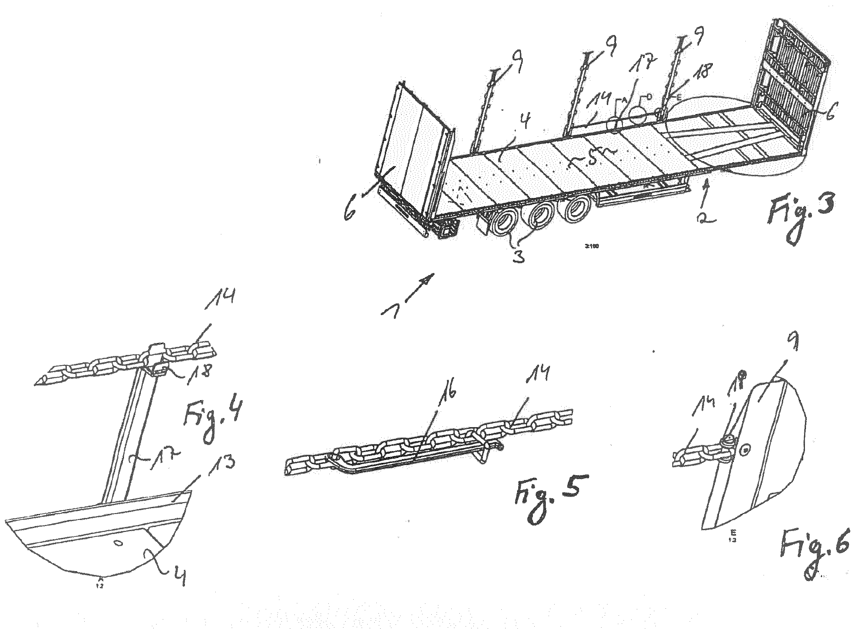

Wie im Einzelnen näher Fig. 4 zeigt, ist der Spannelementhalter 17 derart an dem Laderaumboden 4 bzw. an der entsprechenden Befestigungsleiste 13 so vorgesehen, dass er leicht geneigt zur Laderaummitte ausgerichtet ist, so dass bei Spannung der Spannkette 14 auf die Seitenplane und auf die Profilkörper 12 der Seitenplane 7 eine zur Laderaummitte hin ausgerichtete Kraft ausgeübt wird, die einer entsprechenden Gewichtskraft, ausgelöst durch das Frachtgut, entgegenwirkt. Damit ist einem Ausbeulen der Seitenplane 7 wirksam entgegen getreten, obgleich der für das Vorsehen der Spannvorrichtung 16.1 und des Spannelementes 14 einhergehende Bauaufwand außerordentlich gering ist.

Die Fig. 5 und 6 verdeutlichen noch einmal die Spannvorrichtung 16.1, mit der die Spannkette 14 zu verspannen ist und die Anbindung der Spannkette 14 an dem Be festigungselement 19 der Runge 9.

## Patentansprüche

1. Fahrzeugaufbau (1) für den Transport von schütt-oder stapelbaren Transportgütern, beispielsweise von Fahrzeugreifen, mit einem sich oberhalb eines Laderaumbodens (4) erstreckenden Laderaum (5), der von Stirnwänden (6) vorder- und rückseitig begrenzt ist, zwischen denen sich in Längsrichtung des Fahrzeugaufbaus (1) zu öffnende und zu schließende Seitenplanen (7) zum Verschließen des Laderaums (5) erstrecken, wobei sich im geschlossenen Zustand die Seitenplanen (7) entlang von aufrecht am Laderaumboden (4) festgelegten Rungen (9) erstrecken und in Planentaschen (11) angeordnete Profilkörper (12) zur Aussteifung der jeweiligen Seitenplane (7) aufweisen, **dadurch gekennzeichnet, dass** jede Seitenplane (7) ein sich zumindest zwischen zwei benachbarten Rungen (9) mit Höhenabstand zum Laderaumboden (4) und sich im Wesentlichen parallel zu diesem erstreckendes Spannelement (14) aufweist, wobei das Spannelement (14) die in den Planentaschen (11) zwischen den beiden benachbarten Rungen (9) angeordneten Profilkörper (12) abstützt, zusammen mit der Seitenplane zu bewegen ist und über eine Spannvorrichtung (16.1) zu verspannen ist, wobei das Spannelement (14) flexibel ausgebildet ist und weggenommen werden kann und wobei das Spannelement (14) von der Spannvorrichtung (16.1) derart zu verspannen ist, dass die Seitenplane (7) und deren Profilkörper (12) an dem Spannelement (14) abzustützen sind, und wobei das Spannelement (14) an Befestigungselementen (19) von zwei benachbarten Mittelrungen (9) festgelegt ist.

2. Fahrzeugaufbau nach Anspruch 1, **dadurch gekennzeichnet, dass** das Spannelement (14) einen Raum zwischen einem Profilkörper (12) und einem diesem zugeordneten Abdeckkörper (15) durchsetzt.

3. Fahrzeugaufbau nach Anspruch 2, **dadurch gekennzeichnet, dass** der Raum zwischen dem Profilkörper (12) und dem Abdeckkörper (15) für das Spannelement (14) durch ein Abdeckblech (16) zum Laderaum (5) hin ausgerichtet verschließbar ist.

4. Fahrzeugaufbau nach einem der Ansprüche 1 bis 3, **dadurch gekennzeichnet, dass** das Spannelement (14) durch eine Spannkette, ein Spannseil und/oder einen Spanngurt gebildet ist.

5. Fahrzeugaufbau nach einem der Ansprüche 1 bis 4, **dadurch gekennzeichnet, dass** das Spannelement (14) flexibel ausgebildet ist.

6. Fahrzeugaufbau nach einem der Ansprüche 1 bis 5, **dadurch gekennzeichnet, dass** das Spannelement (14) mit Höhenabstand zum Laderaumboden (4) an einem Spannelementhalter (17) abgestützt ist.

7. Fahrzeugaufbau nach Anspruch 6, **dadurch gekennzeichnet, dass** der Spannelementhalter (17) am Laderaumboden (4) abgestützt ist.

8. Fahrzeugaufbau nach Anspruch 6 oder 7, **dadurch gekennzeichnet, dass** die Rungen (6) und der Spannelementhalter (17) an einer an der Seitenaußenkante des Laderaumbodens (4) vorgesehenen Befestigungsleiste (13) abstütztbar sind.

9. Fahrzeugaufbau nach einem der Ansprüche 7 bis 8, **dadurch gekennzeichnet, dass** der Spannelementhalter (17) mit einer Neigung zur Mitte des Laderaumbodens (4) an diesem befestigt ist.

10. Fahrzeugaufbau nach einem der Ansprüche 1 bis 9, **dadurch gekennzeichnet, dass** die Profilkörper (12) mit der Planentasche (10) durch eine Nietverbindung verbunden sind.

11. Fahrzeugaufbau nach einem der Ansprüche 7 bis 10, **dadurch gekennzeichnet, dass** das Spannelement (14) als Spannkette ausgebildet ist und die Spannkette mit einem Kettenglied auf einen Auslegerarm (18) des Spannelementhalters (17) auflegbar ist.

12. Fahrzeugaufbau nach einem der Ansprüche 1 bis 11, **dadurch gekennzeichnet, dass** eine dem Laderaum zugewandte innere Plane vorgesehen ist, die die Seitenplane (7), die Profilkörper (12) und das Spannelement (14) übergreift und diese zum Laderaum hin abdeckt.

## Claims

1. Vehicle structure (1) for transporting bulk or stackable transport goods, for example vehicle tyres, comprising a cargo hold (5) that extends above a cargo hold floor (4) and is delimited by end walls (6) at the front and rear, between which walls lateral tarpaulins (7) that open and close and that are intended for closing the cargo hold (5) extend in the longitudinal direction of the vehicle structure (1), the lateral tarpaulins (7), in the closed state, extending along stanchions (9) that are secured in an upright manner on the cargo hold floor (4), and comprising profile bodies (12) that are arranged in tarpaulin pockets (11) and are intended for tightening the lateral tarpaulin (7) in question, **characterised in that** each lateral tarpaulin (7) comprises a tensioning element (14) that extends at least between two adjacent stanchions (9) so as to be spaced apart vertically from the cargo hold floor (4) and so as to be substantially parallel thereto, the tensioning element (14) supporting the profile bodies (12) arranged in the tarpaulin pockets (11) between the two adjacent stanchions (9), being moved together with the lateral tarpaulin and being tensioned by means of a tensioning device (16.1), the tensioning element (14) being flexible and removable and the tensioning element (14) being tensioned by the tensioning device (16.1) such that the lateral tarpaulin (7) and the profile bodies (12) thereof are supported on the tensioning element (14), and the tensioning element (14) being secured to fastening elements (19) of two adjacent central stanchions (9).

2. Vehicle structure according to claim 1, **characterised in that** the tensioning element (14) extends through a space between a profile body (12) and a covering body (15) associated therewith.

3. Vehicle structure according to claim 2, **characterised in that** the space for the tensioning element (14) between the profile body (12) and the covering body (15) can be closed off from the cargo hold (5) by means of a covering plate (16).

4. Vehicle structure according to any of claims 1 to 3, **characterised in that** the tensioning element (14) is formed by a tensioning chain, a tensioning rope and/or a tensioning belt.

5. Vehicle structure according to any of claims 1 to 4, **characterised in that** the tensioning element (14) is flexible.

6. Vehicle structure according to any of claims 1 to 5, **characterised in that** the tensioning element (14) is supported on a tensioning element holder (17) so as to be spaced apart vertically from the cargo hold floor (4).

7. Vehicle structure according to claim 6, **characterised in that** the tensioning element holder (17) is supported on the cargo hold floor (4).

8. Vehicle structure according to either claim 6 or claim 7, **characterised in that** the stanchions (6) and the tensioning element holder (17) can be supported on a fastening rail (13) provided on the lateral outer edge of the cargo hold floor (4).

9. Vehicle structure according to either claim 7 or claim 8, **characterised in that** the tensioning element holder (17) is fastened to the cargo hold floor (4) so as to be inclined relative to the centre thereof.

10. Vehicle structure according to any of claims 1 to 9, **characterised in that** the profile bodies (12) are connected to the tarpaulin pocket (10) by means of a rivet connection.

11. Vehicle structure according to any of claims 7 to 10, **characterised in that** the tensioning element (14) is formed as a tensioning chain and a chain link of the tensioning chain can be placed on a radial arm (18) of the tensioning element holder (17).

12. Vehicle structure according to any of claims 1 to 11, **characterised in that** an inner tarpaulin is provided that faces the cargo hold and extends across the lateral tarpaulin (7), the profile bodies (12) and the tensioning element (14) and covers them with respect to the cargo hold.

## Revendications

1. Structure de véhicule (1) destinée au transport d'articles à transporter pouvant être mis en vrac ou empilés, par exemple des pneumatiques de véhicules, ladite structure comprenant un espace de chargement (5) qui s'étend au-dessus d'un plancher d'espace de chargement (4) et qui est limité du côté avant et du côté arrière par des parois frontales (6) entre lesquelles des bâches latérales (7), pouvant s'ouvrir et se fermer, s'étendent dans la direction longitudinale de la structure de véhicule (1) pour fermer l'espace de chargement (5), les bâches latérales (7) s'étendant, une fois fermées, le long de ranchers (9) fixés verticalement au plancher (4) de l'espace de chargement et comportant des corps profilés (12) disposés dans des poches de bâche (11) et destinés à rigidifier la bâche latérale respective (7), **caractérisée en ce que** chaque bâche latérale (7) présente au moins un élément de serrage (14) qui s'étend au moins entre deux ranchers adjacents (9) en ayant une distance en hauteur par rapport au plancher (4) de l'espace de chargement et pratiquement de façon parallèle à celui-ci, où l'élément de serrage (14) supporte les corps profilés (12) disposés dans les poches de bâche (11) entre les deux ranchers adjacents (9), ledit élément de serrage devant être déplacé conjointement avec la bâche latérale et devant être serré par un dispositif de serrage (16.1), où l'élément de serrage (14) est conçu de façon flexible et peut être enlevé, et où l'élément de serrage (14) doit être serré par le dispositif de serrage (16.1), de manière telle que la bâche latérale (7) et ses corps profilés (12) doivent être en appui sur l'élément de serrage (14), et où l'élément de serrage (14) est fixé à des éléments de fixation (19) de deux ranchers centraux adjacents (9).

2. Structure de véhicule selon la revendication 1, **caractérisée en ce que** l'élément de serrage (14) passe à travers un espace ménagé entre un corps profilé (12) et un corps de recouvrement (15) associé à ce dernier.

3. Structure de véhicule selon la revendication 2, **caractérisée en ce que** l'espace ménagé entre le corps profilé (12) et le corps de recouvrement (15) et destiné à l'élément de serrage (14) peut être fermé par une tôle de recouvrement (16) en étant orienté vers l'espace de chargement (5).

4. Structure de véhicule selon l'une quelconque des revendications 1 à 3, **caractérisée en ce que** l'élément de serrage (14) est formé par une chaîne de serrage, un câble de serrage et/ou une sangle de serrage.

5. Structure de véhicule selon l'une quelconque des revendications 1 à 4, **caractérisée en ce que** l'élément de serrage (14) est conçu de façon flexible.

6. Structure de véhicule selon l'une quelconque des revendications 1 à 5, **caractérisée en ce que** l'élément de serrage (14) est en appui sur un support d'élément de serrage (17), en ayant une distance en hauteur par rapport au plancher (4) de l'espace de chargement.

7. Structure de véhicule selon la revendication 6, **caractérisée en ce que** le support d'élément de serrage (17) est en appui sur le plancher (4) de l'espace de chargement.

8. Structure de véhicule selon la revendication 6 ou 7, **caractérisée en ce que** les ranchers (6) et le support d'élément de serrage (17) peuvent venir en appui sur une nervure de fixation (13) prévue au niveau du bord extérieur latéral du plancher (4) de l'espace de chargement.

9. Structure de véhicule selon l'une des revendications 7 à 8, **caractérisée en ce que** le support d'élément de serrage (17) est fixé au plancher (4) de l'espace de chargement, en étant incliné par rapport au milieu dudit plancher.

10. Structure de véhicule selon l'une quelconque des revendications 1 à 9, **caractérisée en ce que** les corps profilés (12) sont reliés à la poche de bâche (10) par un assemblage rivé.

11. Structure de véhicule selon l'une quelconque des revendications 7 à 10, **caractérisée en ce que** l'élément de serrage (14) est conçu comme une chaîne de serrage, et la chaîne de serrage, avec un de ses maillons, peut être placée sur un bras (18) du support d'élément de serrage (17).

12. Structure de véhicule selon l'une quelconque des revendications 1 à 11, **caractérisée en ce qu'**il est prévu une bâche intérieure tournée vers l'espace de chargement, bâche intérieure qui vient s'engager pardessus la bâche latérale (7), les corps profilés (12) et l'élément de serrage (14) et recouvre ceux-ci en direction de l'espace de chargement.
